(19) Europäisches Patentamt
European Patent Office
Office européen des brevets

(11) EP 0 547 957 B1

(12) **FASCICULE DE BREVET EUROPEEN**

(45) Date de publication et mention
de la délivrance du brevet:
**13.03.1996 Bulletin 1996/11**

(51) Int. Cl.⁶: **B60R 16/02**

(21) Numéro de dépôt: **92403395.4**

(22) Date de dépôt: **14.12.1992**

(54) **Boîtier de servitude électrique pour un véhicule automobile**

Zentralelektrik eines Fahrzeugs, insbesondere eines Kraftfahrzeugs

Central electrical unit of a vehicle, particularly of an automobile

(84) Etats contractants désignés:
**DE GB IT**

(30) Priorité: **18.12.1991 FR 9115738**

(43) Date de publication de la demande:
**23.06.1993 Bulletin 1993/25**

(73) Titulaires:
- **AUTOMOBILES PEUGEOT**
  **F-75116 Paris (FR)**
- **AUTOMOBILES CITROEN**
  **F-92200 Neuilly sur Seine (FR)**
- **REGIE NATIONALE DES USINES RENAULT S.A.**
  **F-92109 Boulogne Billancourt (FR)**

(72) Inventeur: **Clique, Jean Michel**
**F-78170 La Celle St Cloud (FR)**

(74) Mandataire: **Habasque, Etienne Joel Jean-François et al**
**Cabinet Lavoix**
**2, Place d'Estienne d'Orves**
**F-75441 Paris Cédex 09 (FR)**

(56) Documents cités:
EP-A- 0 392 824          EP-A- 0 554 465
DE-A- 3 113 509          DE-A- 3 705 297
DE-A- 3 817 879          DE-A- 4 028 504
FR-A- 2 596 216          FR-A- 2 657 733

- PATENT ABSTRACTS OF JAPAN vol. 8, no. 123 (E-249)(1560) 8 Juin 1984 & JP-A-590 036 495 (SUMITOMO) 28 Février 1984
- ATZ Automobiltechnische Zeitschrift 92 (1990) 9; Vogel-Verlag Würzburg (DE); pages 470-481
- ATZ Automobiltechnische Zeitschrift 93 (1991) 3; Vogel-Verlag Würzburg (DE); pages 108-118

## Description

La présente invention concerne un boîtier de servitude électrique pour véhicule automobile.

On connait déjà dans l'état de la technique un certain nombre de boîtiers de ce type qui comportent une platine de servitude sur laquelle sont disposés différents composants électriques de relais, de sectionnement, de protection et de distribution d'énergie et de signaux de contrôle et de commande vers différents organes fonctionnels du véhicule. Un tel boîtier selon le préambule de la revendication 1 est connu par DE-A-31 13 509.

C'est ainsi par exemple que sur cette platine sont disposés différents relais, sectionneurs, fusibles, etc..

Cette platine est également appelée de façon générale " organe de sectionnement et de protection ". Cette platine utilise une technologie de forte puissance, c'est à dire des circuits prédécoupés surmoulés ou des circuits imprimés de très forte épaisseur et élabore les départs de puissance, c'est à dire alimentation positive et négative de la batterie du véhicule, vers les différents organes fonctionnels de celui-ci, tout en assurant l'isolement de cette alimentation en mode veille de l'ensemble du système électrique du véhicule, grâce à des relais sectionneurs intégrés.

Les développements récents en matière d'intégration de systèmes électroniques à bord des véhicules automobiles, ont amené à utiliser des unités centrales de multiplexage des organes fonctionnels du véhicule (voir par example ATZ Automobiltechnische Zeitschrift 92 (1990) 9; Vogel-Verlag Würzburg (DE); pages 470 - 481). Ces unités assurent le pilotage des différents organes fonctionnels du véhicule grâce à des signaux multiplexés qu'elles élaborent, ces signaux étant transmis vers ces différents organes, par exemple par des bus de transmission.

Différentes techniques de transmission de ces signaux ont été élaborées, telles que par exemple les techniques de transmission en mode différentiel.

Ces unités centrales de multiplexage sont en fait des calculateurs électroniques qui utilisent une technologie à circuit imprimé avec des pistes de faible épaisseur et qui élaborent les signaux multiplexés pour la communication entre les différents organes.

Ces signaux multiplexés sont par exemple des signaux DATA et $\overline{\text{DATA}}$. Ces unités centrales gèrent également les modes veille/réveil de l'ensemble du dispositif et réalisent le diagnostic de tous les organes fonctionnels reliés par multiplexage ainsi que des liaisons filaires associées.

De plus, elles comportent la configuration électrique du véhicule et assurent la gestion de son fonctionnement.

Pour des renseignements complémentaires concernant ces différents éléments, on pourra se reporter aux documents FR-A- 2 596 216 et FR-A- 2 657 733.

Dans les véhicules de l'état de la technique, la platine de servitude et l'unité centrale de multiplexage sont disposées dans des emplacements différents du véhicule et sont reliées par un ou plusieurs faisceaux de liaison.

Cependant, cette structure présente un certain nombre d'inconvénients au niveau de l'encombrement et de la fiabilité de transmission des informations, en raison des risques de coupure ou de perturbations par parasites du ou des faisceaux.

Le but de l'invention est donc de résoudre ces problèmes en proposant un boîtier de servitude électrique notamment pour véhicule automobile, qui soit simple et qui permette de supprimer ce type de liaison entre l'unité centrale de multiplexage et l'organe de sectionnement et de protection.

A cet effet, l'invention a pour objet un boîtier de servitude électrique d'un véhicule notamment d'un véhicule automobile, selon les caractéristiques de la revendication 1. Ce boîtier, du type comportant une platine de servitude sur laquelle sont disposés différents composants électriques de relais, de sectionnement, de protection et de distribution d'énergie et de signaux de contrôle et de commande, vers différents organes fonctionnels du véhicule, comporte en outre un module d'unité centrale de multiplexage, reliée auxdits composants électriques de la platine de servitude, le module étant fixé de manière amovible sur le boîtier.

L'invention sera mieux comprise à l'aide de la description qui va suivre, donnée uniquement à titre d'exemple et faite en se référant aux dessins annexés, sur lesquels :

- la Fig.1 représente un schéma synoptique illustrant les différents éléments entrant dans la constitution d'un boîtier de servitude selon l'invention;
- la Fig.2 représente une vue schématique en perspective d'un boîtier de servitude selon l'invention;
- la Fig.3 illustre un exemple d'intégration d'un boîtier de servitude selon l'invention dans un véhicule automobile; et
- la Fig. 4 représente une vue schématique de côté d'un boîtier de servitude selon l'invention.

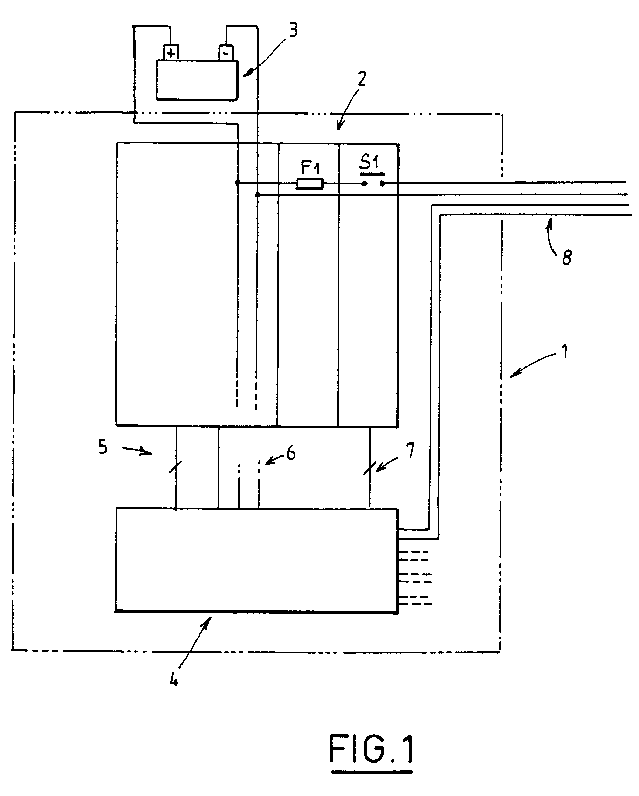

Ainsi qu'on peut le voir sur la Fig.1, un boîtier de servitude électrique, désigné par la référence générale 1, comporte, selon l'invention, une platine de servitude sur laquelle sont disposés différents composants électriques désignés par la référence générale 2, de relais, de sectionnement, de protection et de distribution d'énergie et de signaux de contrôle et de commande vers différents organes fonctionnels du véhicule.

Cette platine étant classique et bien connue dans l'état de la technique, on ne la décrira pas plus en détail. On notera cependant que les composants électriques peuvent comprendre des relais, des sectionneurs, des fusibles et autres.

Cette platine de servitude est également reliée à la borne positive et à la borne négative d'une batterie 3 du véhicule, cette batterie fournissant l'énergie électrique aux différents composants de la platine. Les composants de cette platine redistribuent ensuite cette énergie vers les différents organes fonctionnels du véhicule comme cela sera décrit plus en détail par la suite.

Le boîtier selon l'invention comporte également un module d'unité centrale de multiplexage désigné par la référence générale 4 sur cette figure.

Ce module d'unité centrale de multiplexage est en fait constitué par un module de calculateur électronique permettant de gérer le fonctionnement des différents organes fonctionnels du véhicule et est relié par exemple par l'intermédiaire de liaisons auxiliaires 5 aux composants disposés sur la platine de servitude.

Ainsi qu'on l'a indiqué précédemment, cette platine de servitude et les différents composants disposés sur celle-ci forment l'organe de sectionnement et de protection.

Le calculateur électronique dispose également de sorties de diagnostic désignées par la référence générale 6 sur cette figure.

Ces sorties permettent de contrôler le bon fonctionnement des différents organes reliés par multiplexage ainsi que des liaisons filaires associées.

Des sorties 7 de ce calculateur permettent également à celui-ci de piloter les différents relais et/ou sectionneurs de l'organe de sectionnement et de protection.

Enfin, ce calculateur comporte également des sorties DATA et $\overline{DATA}$ délivrant des signaux de contrôle et de commande des différents organes fonctionnels du véhicule, ces signaux étant associés dans un bus de sortie 8 du boîtier, par exemple à l'alimentation positive et négative de sortie de l'organe de sectionnement et de protection, pour former un bus multiplexé de raccordement des différents organes fonctionnels du véhicule.

On conçoit donc que le boîtier selon l'invention permet de supprimer les liaisons filaires par faisceaux qui existaient dans l'état de la technique entre l'unité centrale de multiplexage et l'organe de sectionnement et de protection.

Celui-ci permet en outre de mélanger les informations logiques de multiplexage provenant de l'unité centrale, à la distribution de puissance fournie par l'organe de sectionnement et de protection. De plus, cette structure permet de ramener au niveau de l'organe de sectionnement et de protection, les différentes informations de diagnostic relatives à l'ensemble du réseau multiplexé et par exemple d'enregistrer ces informations dans l'unité centrale.

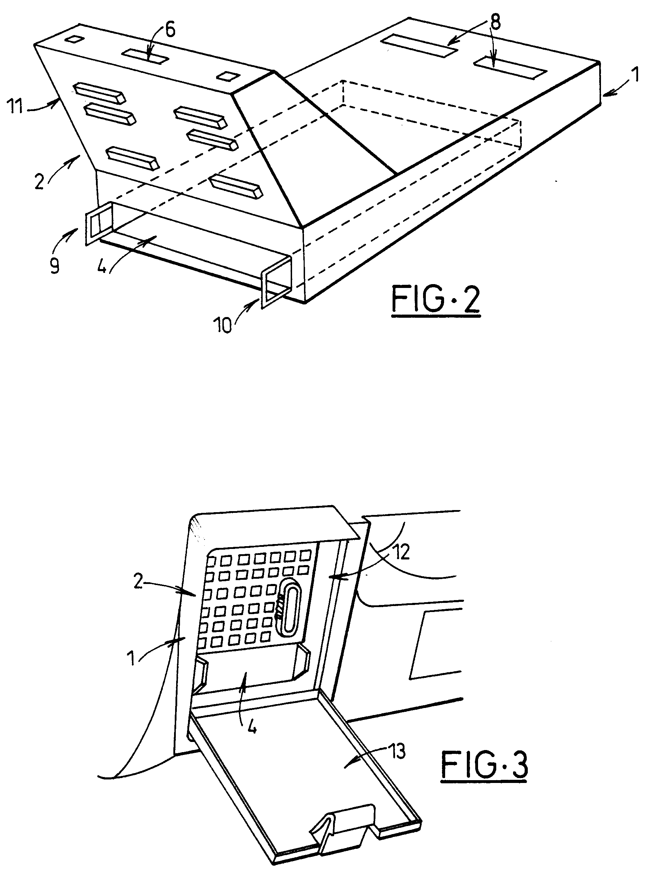

Comme on peut le voir sur la Fig.2, le module d'unité centrale de multiplexage 4 est en fait fixé de manière amovible sur le boîtier 1 et est disposé dans un logement de celui-ci débouchant dans la face avant de ce boîtier.

Ce module comporte au moins une poignée de manutention et dans l'exemple de réalisation, deux poignées de manutention 9 et 10 disposées de chaque côté de celui-ci, permettant à un utilisateur de manipuler ce module très facilement.

Ceci permet par exemple de remplacer très facilement ce module d'unité centrale en cas de panne ou lorsqu'on souhaite modifier la configuration électrique du véhicule ou la gestion des différents organes de celui-ci.

Par ailleurs, cette structure peut également constituer un antivol du véhicule dans la mesure où lorsque ce module d'unité centrale est retiré, le véhicule n'est plus en état de fonctionner.

Ce module est en fait disposé dans un logement situé sous une paroi inclinée de ce boîtier, désignée par la référence générale 11, sur laquelle sont disposés les différents composants électriques de relais, de sectionnement et de protection 2, tels que par exemple les fusibles.

Des connecteurs de sortie de diagnostic 6 et de sortie de bus multiplexé 8, décrites précédemment, sont également prévus sur ce boîtier.

Comme cela sera décrit plus en détail par la suite, le module d'unité centrale de multiplexage peut être relié aux composants électriques de la platine de servitude par des moyens de connexion internes de type à encastrement "fond de panier".

Sur la Fig.3, on a représenté un exemple d'intégration de ce boîtier dans un véhicule automobile.

Plus particulièrment, ce boîtier 1 peut être disposé dans un évidement 12 prévu dans la planche de bord du véhicule.

Un volet 13 est également prévu pour masquer cet évidement.

On conçoit que cette disposition avec un module d'unité centrale de multiplexage 4 disposé sous les composants électriques de relais, de sectionnement et de protection 2 permet à un utilisateur d'avoir très rapidement accès à ce module d'unité centrale, par exemple pour son remplacement.

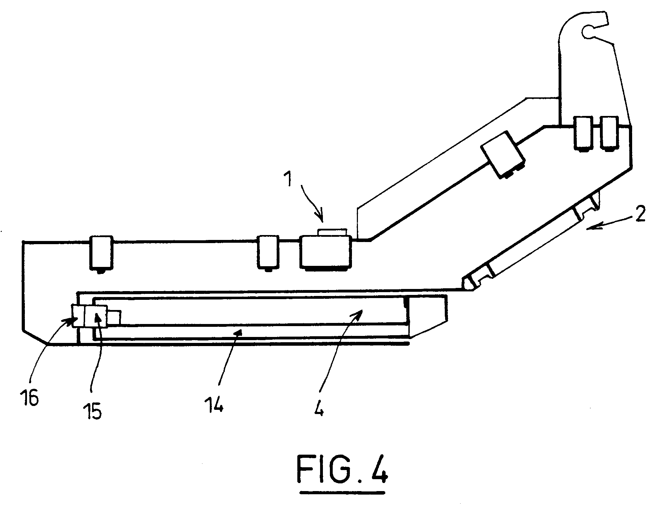

Sur la Fig.4, on constate que le module d'unité centrale de multiplexage 4 comporte des glissières latérales désignées par la référence générale 14 sur cette figure et adaptées pour coopérer avec des moyens de guidage complémentaires du boîtier pour son maintien dans le boîtier et son introduction et son retrait de celui-ci.

Par ailleurs, ce module comporte également des moyens de raccordement 15 adaptés pour coopérer avec des moyens complémentaires du boîtier 16 pour relier l'unité centrale de multiplexage aux composants de la platine.

Ces moyens de raccordement étant bien connus dans l'état de la technique, on ne les décrira pas plus en détail.

On conçoit que le regroupement de l'organe de sectionnement et de protection et de l'unité centrale dans un même boîtier permet de constituer un ensemble homogène logé en lieu et place de la platine de servitude classique d'un véhicule automobile.

Ce regroupement permet également de respecter les deux technologies très différentes de réalisation des deux constituants de celui-ci, à savoir l'unité centrale et l'organe de sectionnement et de protection.

## Revendications

1. Boîtier (1) de servitude électrique pour véhicule automobile, du type comportant une platine de servitude sur laquelle sont disposés différents composants électriques (2) de relais, de sectionnement, de protection et de distribution d'énergie et de signaux de contrôle et de commande, vers différents organes fonctionnels du véhicule, caractérisé en ce qu'il comporte en outre, un module d'unité centrale de multiplexage (4), reliée auxdits composants électriques de la platine de servitude, ce module (4) étant fixé de manière amovible sur le boîtier et comportant des glissières latérales (14) adaptées pour coopérer avec des moyens complémentaires de guidage du boîtier (1) et des moyens de raccordement (15) adaptés pour coopérer avec des moyens complémentaires (16) du boitier (1) pour raccorder le module d'unité centrale (4) aux composants de la platine (2) et au moins une poignée de manutention (9,10).

2. Boîtier selon la revendication 1, caractérisé en ce que le module d'unité centrale de multiplexage (4) est disposé dans un logement débouchant dans la face avant du boîtier (1).

3. Boîtier selon l'une quelconque des revendications précédentes, caractérisé en ce qu'il comporte un connecteur de diagnostic relié à des sorties de diagnostic (6) de l'unité centrale de multiplexage (4).

4. Boîtier selon l'une quelconque des revendications précédentes, caractérisé en ce qu'il est disposé dans un évidement (12) de la planche de bord du véhicule, et en ce qu'un volet (13) est prévu pour masquer cet évidement.

## Claims

1. Electrical control box (1) for a motor vehicle, of the type comprising a control board on which there are disposed various relay, isolation, protection and power distribution electrical components (2) and components for monitoring and controlling signals to various functional devices in the vehicle, characterised in that it also includes a central multiplexing unit module (4), connected to the said electrical components of the control board, this module (4) being removably fixed to the box and having lateral runners (14) adapted for cooperating with complementary guide means for the box (1) and connection means (15) adapted for cooperating with complementary means (16) on the box (1) in order to connect the central unit module (4) to the components of the board (2) and at least one carrying handle (9, 10).

2. Box according to Claim 1, characterized in that the central multiplexing unit module (4) is disposed in a housing opening out in the front face of the box (1).

3. Box according to any one of the preceding claims, characterised in that it includes a diagnostics connector linked to diagnostics outputs (6) of the central multiplexing unit (4).

4. Box according to any one of the preceding claims, characterized in that it is disposed in a recess (12) in the fascia of the vehicle, and in that a flap (13) is provided to mask this recess.

## Patentansprüche

1. Zentralelektrik (1) eines Kraftfahrzeugs, bestehend aus einer Platine, auf der verschiedene elektrische Bauteile (2) für Relais, Trennung, Schutz und Energieverteilung und Kontroll- und Steuersignale zu verschiedenen Funktionsorganen des Fahrzeugs angeordnet sind, dadurch gekennzeichnet, daß sie ferner ein Modul einer Multiplex-Zentraleinheit (4) umfaßt, die an die elektrischen Bauteile der Platine angeschlossen ist, wobei dieses Modul (4) abnehmbar auf der Elektrik montiert ist und seitliche Gleitschienen (14) umfaßt, die dermaßen ausgeführt sind, daß sie mit komplementären Führungsmitteln der Elektrik (1) zusammenwirken, und Anschlußmittel (15) umfaßt, die dermaßen ausgeführt sind, daß sie mit komplementären Mitteln (16) der Elektrik (1) zusammenwirken, um das Zentraleinheitsmodul (4) an die Bauteile der Platine (2) anzuschließen, und zumindest einen Bedienungsgriff (9, 10) umfaßt.

2. Elektrik nach Anspruch 1, dadurch gekennzeichnet, das das Modul der Multiplex-Zentraleinheit (4) in einer Lagerung angeordnet ist, die in die Vorderseite der Elektrik (1) mündet.

3. Elektrik nach einem der vorhergehenden Ansprüche, dadurch gekennzeichnet, daß sie einen Diagnosestecker umfaßt, der an Diagnoseausgänge (6) der Multiplex-Zentraleinheit (4) angeschlossen ist.

4. Elektrik nach einem der vorhergehenden Ansprüche, dadurch gekennzeichnet, daß sie in einer Aussparung (12) des Instrumentenbrettes des Fahrzeugs angeordnet ist und daß eine Klappe (13) vorgesehen ist, um diese Aussparung abzudecken.

F1    S1

3

2

8

1

5    6    7

4

## FIG.1

FIG·2

FIG·3

FIG. 4